# EUROPÄISCHE PATENTANMELDUNG

(11) **EP 2 241 947 A1**
(43) Veröffentlichungstag der Anmeldung: **20.10.2010**
(21) Anmeldenummer: 09158134.8
(22) Anmeldetag: 17.04.2009
(51) Int. Cl.: G05B 19/042

(54) **Baugruppe und Verfahren zur Aktualisierung von einer Baugruppe**

(71) Anmelder: Siemens AG, Wittelsbacher Platz 2 80333 München (DE)
(72) Erfinder: Die Erfindernennung liegt noch nicht vor

(57) **Zusammenfassung**

Die Erfindung betrifft eine Baugruppe ausgestaltet zum modularen Aufbau eines Steuerungssystems umfassend mehrere Baugruppen, mit
- einem Mittel zum Aufbau von Kommunikationsverbindung zu weiteren Baugruppen,
- einem Speichermittel zum Speichern eines Betriebssystems,
- einem Aufnahmemittel zur Aufnahme eines Speichermoduls,
- einem Erkennungsmittel zum Erkennen einer beabsichtigten Aktualisierung des Betriebssystems einer oder mehrerer Baugruppen des Steuerungssystems,
- einem Koordinationsmittel zur Koordinierung einer Aktualisierung des jeweiligen Betriebssystems einer bestimmbaren Anzahl von Baugruppen.

## Beschreibung

Die Erfindung betrifft eine Baugruppe, ausgestaltet zum modularen Aufbau eines Steuerungssystems umfassend mehrere Baugruppen, mit einem Mittel zum Aufbau einer Kommunikationsverbindung zu einer weiteren Baugruppe, einem Speichermittel zum Speichern eines Betriebssystems, und einem Aufnahmemittel zur Aufnahme eines Speichermoduls.

Des Weiteren betrifft die Erfindung ein Verfahren zur Aktualisierung von einem Betriebssystem einer Baugruppe eines aus einer Mehrzahl von Baugruppen modular aufgebauten Steuerungssystems, wobei die Baugruppen über ein Mittel zu Kommunikation miteinander verbunden werden und dadurch eine geforderte Funktionalität des Steuerungssystems hergestellt wird, jeder Baugruppe ein Speichermittel für ein der Baugruppe zugeordnetes Betriebssystem zugewiesen wird, und ein Speichermodul in eine der Baugruppen, welche ein Aufnahmemittel aufweist, gesteckt wird.

Bei Baugruppen, welche mit Mikrocontrollern arbeiten, beispielsweise Baugruppen eines Automatisierungssystems zur Automatisierung von industriellen Prozessen, ist es häufig erforderlich, Fehlerbehebungen, neue Eigenschaften und Merkmale über Firmware-Updates einzubringen. In vielen Fällen ist es nicht möglich, für das Firmware-Update ein externes Gerät an die Baugruppe anzuschließen. Andererseits verfügt aber auch nicht jede Komponente, also Baugruppe, eines Automatisierungssystems über die Möglichkeit ein Speichermedium aufzunehmen.

Unter Firmware versteht man Software, die in elektronische Geräte eingebettet ist, wobei sie vorzugsweise in einem Flashspeicher, einem EPROM, einem EEPROM oder ROM gespeichert und durch den Anwender nur mit speziellen Mitteln bzw. Funktionen austauschbar ist. Ein Betriebssystem ist die Software, die die Verwendung, den Betrieb eines Rechensystems bzw. einer elektronischen Komponente ermöglicht. Es verwaltet Betriebsmittel, wie Speicher, Ein- und Ausgabegeräte, und steuert die Ausführung von Programmen.

Nach EP 0 969 359 A2 ist ein Verfahren zur Aktualisierung von Software und Daten in verteilten Systemen bekannt. Nachteilig an diesem Verfahren bzw. an der offenbarten Vorrichtung ist es, dass über ein zentrales Rechensystem mit einer Festplatte, die Baugruppen mit einer aktualisierten Software versorgt werden.

Aufgabe der Erfindung ist es, eine Baugruppe bereitzustellen, welche unabhängig von einem zentralen Rechensystem für die Durchführung eines vereinfachten Firmware-Updates geeignet ist.

Die Aufgabe wird vorrichtungsgemäß durch die eingangs genannte Baugruppe gelöst, wobei die Baugruppe ein Erkennungsmittel zum Erkennen einer beabsichtigten Aktualisierung des Betriebssystems einer oder mehrerer Baugruppen des Steuerungssystems und ein Koordinationsmittel zur Koordinierung einer Aktualisierung des jeweiligen Betriebssystems einer bestimmbaren Anzahl von Baugruppen aufweist. Bei einem Steuerungssystem, welches durch derartig ausgestaltete Baugruppen aufgebaut ist, ist es von Vorteil, dass durch Einstecken eines Speichermoduls, vorzugsweise einer Memory-Karte, insbesondere einer SD-Karte, eine einzelne Baugruppe oder auch das ganze Steuerungssystem mit neuer Firmware versorgt werden kann. Insbesondere bei Automatisierungsgeräten, welche in industriellen Prozessen eingesetzt werden und zum Teil schwer zugänglich sind oder nicht für den Anschluss an ein zentrales Rechensystem geeignet sind, ist das Aktualisieren der Betriebssysteme über eine beliebige Baugruppe von besonderem Vorteil, da sich das Steuerungssystem an einer schwer zugänglichen Stelle befinden kann und somit beispielsweise nur ein Teil, also nur eine Unterbaugruppe des Steuerungssystems zugänglich ist.

In einer vorteilhaften Ausgestaltung ist das Erkennungsmittel zum Aktivieren der Baugruppe als eine Stellvertreterbaugruppe, welche eine hierarchische Verwaltung der Aktualisierung der Speichermittel durchführt, ausgestaltet. Durch die Stellvertreterfunktion einer Baugruppe, die die Aktualisierung/Updates an andere Baugruppen weiterleitet, wird ein Vorgang zur Aktualisierung der Baugruppen bzw. des gesamten Steuerungssystems erleichtert.

Mit Vorteil ist das Koordinationsmittel dazu ausgestaltet, aus einem Datensatz, welcher auf dem Speichermodul gespeichert ist, Parameter auszulesen und anhand einer durch die Parameter bestimmten Aktualisierungsvorschrift einer Zielbaugruppe ein aktualisiertes Betriebssystem in das Speichermittel zu schreiben. So ist beispielsweise das Koordinationsmittel dazu ausgestaltet, die Aktualisierungsvorschrift, welche nach Wunsch des Anwenders zusammengestellt wurde, auszulesen und abhängig von der jeweiligen Konfiguration des Steuerungssystems das Update über ein internes Bussystem durchzuführen. Das interne Bussystem ist ein Bussystem, welches die Baugruppen untereinander, vorzugsweise über die Steckmittel, verbindet. So kann beispielsweise eine als CPU ausgelegte SPS, die Funktion einer Zentraleinheit einnehmen, wobei diese über das Bussystem an Peripheriekomponenten, den weiteren Baugruppen, verbunden ist. Als weitere Baugruppen zu der Zentraleinheit sind zu nennen, eine Analogeingabe-/Ausgabebaugruppe, eine Digitaleingabe-/Ausgabebaugruppe, eine Regelbaugruppe, eine Kommunikationsbaugruppe, usw.. Das Koordinationsmittel übernimmt dabei vorzugsweise folgende Aufgaben:

Eine Baugruppenidentifikation, eine Hardware-Erkennung, eine Ablaufsteuerung eines Boot-Loader/Boot-Block, eine Fehleridentifikation, eine Fehlerbehandlung, eine Generierung von Diagnoseeinträgen, eine Sicherung von alten Betriebssystemen, eine weitere Koordinierung im Falle von redundant ausgelegten Baugruppen.

Verfahrensgemäß wird die eingangs genannte Aufgabe durch das eingangs genannte Verfahren dadurch gelöst, dass bei einem Einstecken des Speichermoduls in eine der Baugruppen, welche ein Aufnahmemittel aufweisen, über ein Erkennungsmittel in der Baugruppe mit dem eingesteckten Speichermodul eine Handlungsanweisung "Firmware-Update" erkannt wird und diese Baugruppe als eine Stellvertreterbaugruppe eingestellt wird, und das jeweilige Speichermittel einer bestimmbaren Anzahl von Baugruppen in dem Steuerungssystem aktualisiert wird. Durch die Verfahrensschritte: Einstecken eines Speichermoduls und das anschließende Einstellen der Baugruppe zu einer Stellvertreterbaugruppe, erfolgt eine Aufgabenzuteilung der jeweiligen Baugruppe, eine hierarchisch übergeordnete Rolle in dem Steuerungssystem zu übernehmen und die Verwaltung der Aktualisierung der Speichermittel durchzuführen. Hierdurch wird eine geforderte Aktualisierung eines Steuerungssystems, welches üblicherweise aus mehreren modular zusammengestellten Baugruppen besteht, erheblich vereinfacht.

Die verfahrensmäßig eingestellte Baugruppe, welche nun als Stellvertreterbaugruppe agiert, bedient sich einer Aktualisierungsvorschrift und wird demnach sukzessive die Baugruppen updaten.

Gemäß der Zeichnung wird ein Ausführungsbeispiel erläutert, es zeigen:
- FIG 1: ein modular aufgebautes Steuerungssystem und
- FIG 2: einen Datensatz mit Informationen für einen Update-Vorgang.

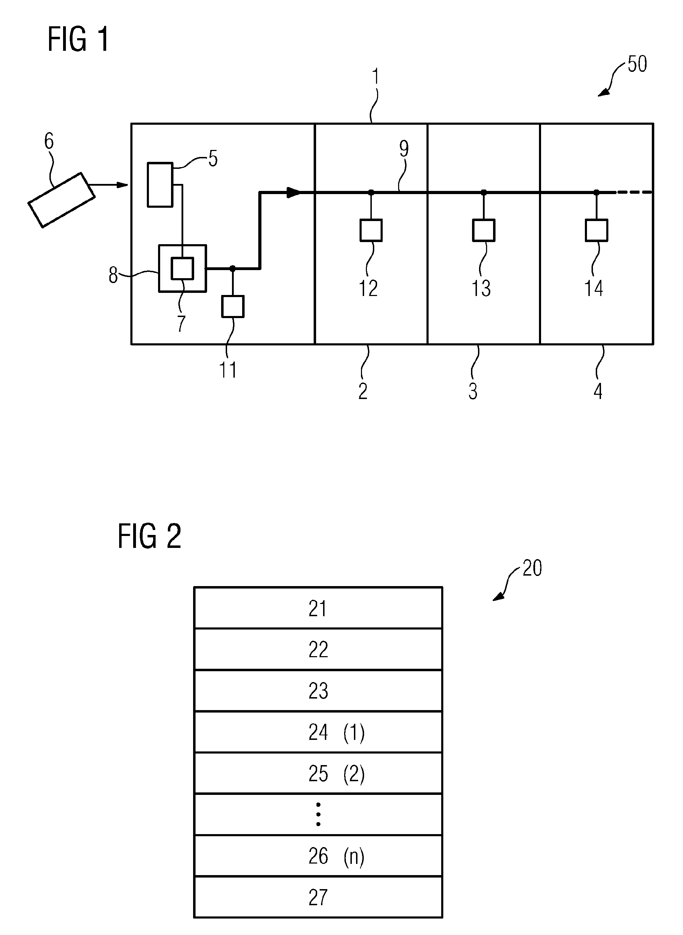

Gemäß FIG 1 ist ein Steuerungssystem 50 mit einer ersten Baugruppe 1, einer zweiten Baugruppe 2, einer dritten Baugruppe 3 und einer vierten Baugruppe 4 zu einem modular aufgebauten Automatisierungssystem zusammengestellt. Die erste Baugruppe 1 übernimmt die Funktion einer Zentralbaugruppe, nämlich einer CPU einer speicherprogrammierbaren Steuerung (SPS). Die Baugruppen 1,...,4 weisen jeweils dazugehörige erste Speichermittel 11 bis vierte Speichermittel 14 auf. In diesen Speichermitteln 11 bis 14 ist ein der jeweiligen Baugruppe zugeordnetes Betriebssystem gespeichert. In diesem Ausführungsbeispiel verfügt die Zentralbaugruppe über ein Aufnahmemittel 5, in welches ein Speichermodul 6 steckbar ist. Für das Steuerungssystem 50 lassen sich beliebige Konfigurationen von Baugruppen zusammenstellen. Dabei ist es nicht zwingend notwendig, dass die erste Baugruppe über ein Aufnahmemittel 5 verfügt. Es ist ebenso denkbar, dass entweder jede der Baugruppen über ein entsprechendes Aufnahmemittel 5 verfügt oder bei einer Zusammenstellung von vier Baugruppen nur die vierte Baugruppe ein entsprechendes Aufnahmemittel 5 aufweist.

Stellvertretend für die übrigen Baugruppen wird ein möglicher Update-Vorgang des Steuerungssystems 50 bzw. auch nur einzelner Baugruppen 1,...,4 anhand eines Einsteckens eines Speichermoduls 6 in das Aufnahmemittel 5 der ersten Baugruppe 1, also der Zentralbaugruppe, dargelegt. Voraussetzung für einen erfolgreichen Update-Vorgang ist es, dass die Baugruppen 1,...,4 über vorzugsweise Steckmittel miteinander verbunden sind. Diese Steckmittel kontaktieren vorzugsweise ein von Baugruppe zu Baugruppe entstehendes Bussystem 9. Damit zieht sich das Bussystem 9 durchgängig von einem Anfangspunkt des Steuerungssystems 50 bis zu einem Endpunkt des Steuerungssystems 50. Somit sind vorzugsweise alle Baugruppen 1,...,4 in dem Steuerungssystem 50 an das Bussystem 9 angeschlossen. Die Verbindungen von Baugruppe zu Baugruppe können in einer alternativen Ausgestaltung auch drahtlos erfolgen. Die Mittel zum Aufbau einer oder mehrerer Kommunikationsverbindungen sind dann beispielsweise als eine WLAN-Einheit ausgestaltet.

Das Aufnahmemittel 5 zur Aufnahme des Speichermoduls 6 in der Zentralbaugruppe steht mit einem Erkennungsmittel 7 in Verbindung. Dieses Erkennungsmittel 7 ist als ein elektronisches Bauelement ausgelegt, welches das Aufnahmemittel 5 überwacht.

Für den Fall, dass das Speichermodul 6 in das Aufnahmemittel 5 gesteckt wird, teilt das Erkennungsmittel 7 einem Koordinationsmittel 8 mit, dass eine beabsichtigte Aktualisierung des Betriebssystems einer oder mehrerer Baugruppen 1,...,4 des Steuerungssystems 50 durch den Anwender gewollt ist. Das Koordinationsmittel 8 übernimmt dabei die Koordinierung der Aktualisierung des jeweiligen Betriebssystems einer bestimmbaren Anzahl von Baugruppen 1,...,4. Quasi zeitgleich aktiviert das Erkennungsmittel 7 die erste Baugruppe 1 als eine Stellvertreterbaugruppe, welche eine hierarchische Verwaltung der Aktualisierung der Speichermittel 11,...,14 durchführt. Das Koordinationsmittel 8 ist derart ausgestaltet, dass es von dem Speichermodul 6 einen Datensatz 20 (s. FIG 2) ausliest und anhand einer durch die Parameter bestimmten Aktualisierungsvorschrift einer vom Anwender gewollten Zielbaugruppe ein aktualisiertes Betriebssystem in das Speichermittel 11,...,14 schreibt. Hierzu ist das Koordinationsmittel 8 mit dem Bussystem 9 verbunden. An das Bussystem 9 sind als Busteilnehmer die Speichermittel 11,...,14 angeschlossen.

FIG 2 zeigt einen Datensatz 20, wie er zur Aktualisierung von Betriebssystemen auf dem Speichermodul 6 hinterlegt ist. Nach einer Strukturinformation 21 folgt eine erste Ablaufkennung 22. Die erste Ablaufkennung 22 kann optional erweiterte Strukturinformationen enthalten. Eine zweite Ablaufkennung 23 dient beispielsweise einem Ablauf für einen Update-Vorgang für redundante Steuerungssysteme, welche z.B. bei fehlersicheren Steuerungssystemen oder hoch verfügbaren Steuerungssystemen eingesetzt werden. Es folgt ein erster Nettodatensatz 24. Dieser erste Nettodatensatz 24 stellt die Baugruppen-Firmware der zweiten Baugruppe 2 für das zweite Speichermittel 12 dar. Entsprechend stellt ein zweiter Nettodatensatz 25 die Baugruppen-Firmware der dritten Baugruppe 3 für das dritte Speichermittel 13 dar. Ein n-ter Nettodatensatz 26 stellt dementsprechend die Baugruppen-Firmware für eine n-te Baugruppe dar. Der Datensatz 20 wird mit Baugruppeninformationen 27 abgeschlossen, beispielsweise können hier optional Produktinformationen der jeweiligen Baugruppe gespeichert sein.

## Patentansprüche

1. Baugruppe (1,...,4) ausgestaltet zum modularen Aufbau eines Steuerungssystems (50) umfassend mehrere Baugruppen (1,...,4), mit
- einem Mittel zum Aufbau einer Kommunikationsverbindung zu einer weiteren Baugruppe,
- einem Speichermittel (11,...,14) zum Speichern eines Betriebssystems,
- einem Aufnahmemittel (5) zur Aufnahme eines Speichermoduls (6),
- einem Erkennungsmittel (7) zum Erkennen einer beabsichtigten Aktualisierung des Betriebssystems einer oder mehrerer Baugruppen des Steuerungssystems (50),
- einem Koordinationsmittel (8) zur Koordinierung der Aktualisierung des jeweiligen Betriebssystems einer bestimmbaren Anzahl von Baugruppen (1,...,4).

2. Baugruppe (1,...,4) nach Anspruch 1,
wobei das Erkennungsmittel (7) zum Aktivieren der Baugruppe als eine Stellvertreterbaugruppe, welche eine hierarchische Verwaltung der Aktualisierung der Speichermittel durchführt, ausgestaltet ist.

3. Baugruppe (1,...,4) nach Anspruch 1 oder 2,
wobei das Koordinationsmittel (8) dazu ausgestaltet ist aus einem Datensatz (20), welcher auf dem Speichermodul (6) gespeichert ist, Parameter auszulesen und anhand einer durch die Parameter bestimmten Aktualisierungsvorschrift einer Zielbaugruppe ein aktualisiertes Betriebssystems in das Speichermittel (11,...,14) zu schreiben.

4. Baugruppe nach Anspruch 2, wobei die Stellvertreterbaugruppe eine Zentraleinheit mit über ein Bussystem (9) angeschlossenen Peripheriekomponenten ist.

5. Verfahren zur Aktualisierung von einem Betriebssystem einer Baugruppe (1,...,4) eines aus einer Mehrzahl von Baugruppen (1,...,4) modular aufgebauten Steuerungssystems (50), wobei
- die Baugruppen (1,...,4) über ein Mittel zur Kommunikation miteinander verbunden werden und **dadurch** eine geforderte Funktionalität des Steuerungssystems (50) hergestellt wird,
- jeder Baugruppe (1,...,4) ein Speichermittel (11,...,14) für ein der Baugruppe zugeordnetes Betriebssystem zugewiesen wird,
- ein Speichermodul (6) in eine der Baugruppen, welche ein Aufnahmemittel (5) aufweist, gesteckt wird und über ein Erkennungsmittel (7) in der Baugruppe mit dem eingesteckten Speichermodul (6) diese als eine Stellvertreterbaugruppe eingestellt wird,
- und das jeweilige Speichermittel (11,...,14) einer bestimmbaren Anzahl von Baugruppen in dem Steuerungssystem (50) aktualisiert wird.

6. Verfahren nach Anspruch 5,
wobei die Baugruppe (1,...,4) als eine Stellvertreterbaugruppe, welche eine hierarchische Verwaltung der Aktualisierung der Speichermittel (11,...,14) durchführt, eingestellt wird.

7. Verfahren nach Anspruch 6,
wobei aus einem Datensatz, welcher auf dem Speichermodul (6) gespeichert ist, Parameter ausgelesen werden und anhand einer durch die Parameter bestimmten Aktualisierungsvorschrift eine Zielbaugruppe ein aktualisiertes Betriebssystems in das Speichermittel (11,...,14) geschrieben wird.
